# EUROPEAN PATENT APPLICATION

(11) **EP 1 004 424 A1**
(43) Date of publication of application: **31.05.2000**
(21) Application number: 98307148.1
(22) Date of filing: 04.09.1998
(51) Int. Cl.: B29C 47/88, B29C 47/92

(54) **Air ring for cooling blown plastic film**

(71) Applicant: Macro Engineering & Technology Inc., Mississauga, Ontario L4Z 2E5 (CA)
(72) Inventor: Planeta, Mirek, Mississauga, Ontario L4Z 2E5 (CA); Dang, Nghia C., Toronto, Ontario M6B 1K3 (CA)
(74) Representative: Davies, Gregory Mark

(57) **Abstract**

An air ring (12) for supplying cooling air to a hot extruded plastic film (14) after the film (14) has been extruded from an annular extrusion die (16) at an elevated temperature has an annular body (18,22) which surrounds the tubular film (14) after the film has left the extrusion die (16). The said body (18,22) has a circumferentially extending air passage (25) through which air can be supplied from an external source and which directs cooling air from the passage between the body and the film. A circumferentially extending series of individually operable actuators (40) are each operable to vary the flow of cooling air to cause the film (14) to become nearer to or further from the body (18,22) at its circumferential location to cause the thickness of the film (14) at said location to decrease or increase.

## Description

This invention relates to air rings for cooling blown plastic film, that is to say for supplying cooling air to an extruded tubular plastic film after the film has been extruded from an annular extrusion die at an elevated temperature, i.e. above ambient temperature.

An air ring of this kind is described in US Patent number 5464336 (Planeta) issued November 7, 1995, the contents of which are hereby incorporated herein by reference. One of the problems encountered in extruding tubular plastic film in this manner is gauge control, i.e. control of the thickness of the film. It has been proposed to effect gauge control by adjusting the angle at which cooling air contacts the film at different circumferential locations around the film as the film leaves the extrusion die. One such proposal is described in US Patent number 4209475 (Herrington *et al*) issued June 24, 1980, which teaches the use of a circumferentially arranged series of individually adjustable deflector blades to alter the angle at which the air contacts the film. However, such an arrangement does not provide as much gauge control as desired and is difficult to adjust manually.

European Patent Publication number 0524697 (Deponte), published January 27, 1993, describes a proposal to locally throttle an annular conduit directly carrying a current of cooling air to the tubular film, but again such a proposal does not provide satisfactory gauge control.

It is therefore an object of the present invention to provide an air ring with an improved arrangement for effecting gauge control of the film as the film leaves the extrusion die so that a greater range of and/or more readily adjustable gauge control can be achieved.

According to the present invention, an air ring has an annular body which surrounds the tubular film after the film has left the extrusion die, the body having a circumferentially extending air passage through which air can be supplied from an external source and which directs cooling air from the passage between the body and the film, and a circumferentially extending series of individually operable actuators each operable to vary the flow of cooling air to cause the film to become nearer to or further from the body at its circumferential location to cause the thickness of the film at said location to decrease or increase.

Embodiments of the invention will now be described, by way of example, with reference to the accompanying drawings, of which:
Figure 1 is a vertical sectional view of an air ring in accordance with one embodiment of the invention mounted on an annular extrusion die;
Figure 2 is a bottom view of part of the air ring of Figure 1;
Figure 3 is a vertical sectional view of an air ring in accordance with another embodiment of the invention;
Figure 4 is a bottom view of part of the air ring of Figure 3;
Figure 5 is a vertical sectional view of an air ring in accordance with a further embodiment of the invention;
Figure 6 is a plan view of part of the air ring of Figure 5;
Figure 7 is a vertical sectional view of an air ring in accordance with a still further embodiment of the invention; and,
Figure 8 is a plan view of part of the air ring of Figure 7.

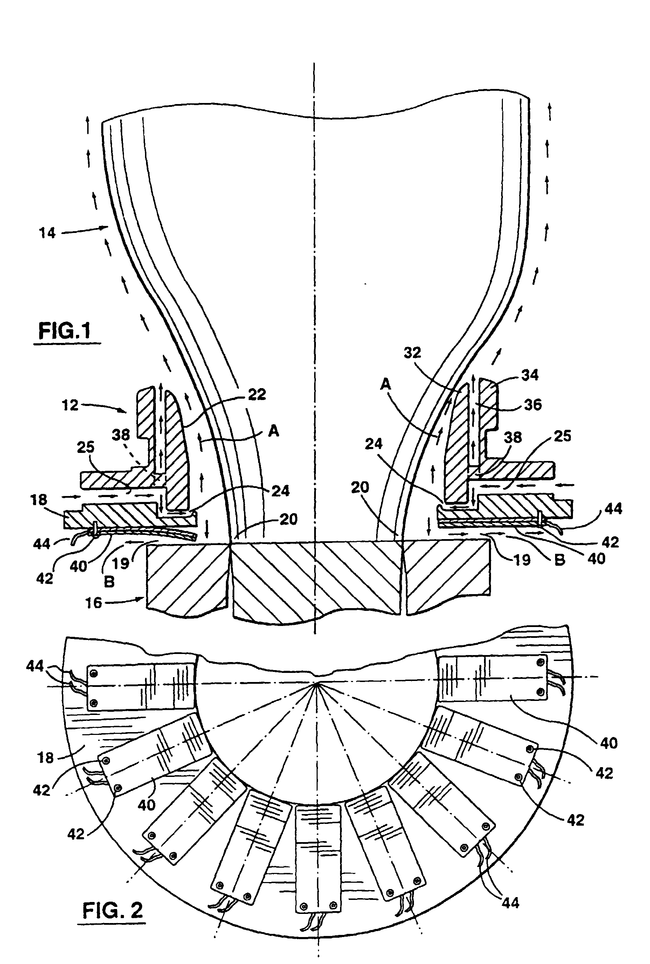

Referring first to Figures 1 and 2 of the drawings, an air ring 12 in accordance with one embodiment of the invention is provided for supplying air to an extruded tubular plastic film bubble 14 after the film 14 has been extruded from an annular extrusion die 16 at an elevated temperature.

The air ring 12 has a lower annular body member 18 secured above the extrusion due 16 in spaced relationship therewith so as to provide a circumferentially extending air passage 19 between the body member 18 and the die 16, which has an annular extrusion orifice 20 from which the tubular film 14 is extruded. An upper annular body member 22 is mounted above the lower annular body member 18 in spaced relationship therewith to form a circumferentially extending air passage 24 to which cooling air can be supplied through a passage 25 from an external cooling air source (not shown). The cooling air passes from the passage 24 upwardly between the upper annular body member 22 and the film 14 as indicated by arrows A, and can also pass downwardly from the passage 24 through the passage 19 as indicated by arrows B.

The manner in which the lower annular body member 18 is mounted above the die 16 and the manner in which the upper annular body member 22 is mounted above the lower annular body member 18 will be readily apparent to a person skilled in the art.

The upper annular body member 22 has an inner tubular portion 32 and an outer tubular portion 34 surrounding the inner tubular portion 32 and spaced therefrom to form a circumferentially extending air passage 36. Cooling air is supplied to the air passage 36 from the air supply passage 25 through circumferentially spaced apertures 38 in the body member 18. As shown in Figure 1, cooling air flowing upwardly through the circumferential passage 36 leaves the upper end of the air ring 12 to merge with the cooling air flowing upwardly between the air ring 12 and the plastic film 14 from the passage 24.

In this embodiment, localised lateral movement of the film 14 such that the film 14 becomes nearer to or further from the annular body member 22 of the air ring 12 is effected by adjusting the flow of air from the air passage 24 to the air passage 19, thereby locally varying the pressure created between the film 14 and the annular body member 22.

A series of closely-spaced radially extending bi-metallic members 40 extends around the bottom of the lower annular body member 18, with each bi-metallic member 40 being secured at its radially outer end to the bottom of the lower annular body member 18 by screws 42. The radially inner end of each bi-metallic member 40 is located in the annular passage 19 between the bottom of the lower annular body member 18 and the top of the die 16. Each bi-metallic member 40 is connected by electrical leads 44 to appropriate electrical controls (not shown), the nature of which will be readily apparent to a person skilled in the art.

Each bi-metallic member 40 can be operated to vary the pressure of air through the air passage 19 at its circumferential location. In a non-operative position as seen on the right hand side of Figure 1, a bi-metallic member 40 causes minimum obstruction to air flow through the air passage 19 at that circumferential location. By supplying an appropriate electrical current to a bi-metallic member 40, as shown on the left hand side of Figure 1, the radially inner end portion of the bi-metallic member 40 is caused to bend downwardly to obstruct the flow of air through the air passage 19 at that circumferential location by a pre-determined amount.

When a bi-metallic member 40 is in the non-operative position as shown on the right hand side of Figure 1, maximum air flows through the passage 19, with the result that minimum air flows upwardly between the film 14 and the upper annular body member 32 of the air ring 12. Consequently, the portion of the film 14 at that circumferential location travels upwardly in a path relatively near the upper annular body member 32. The film 14 is thus more laterally stretched at the circumferential location and has a lesser thickness.

When a bi-metallic member 40 is in a deflected position as shown on the left hand side of Figure 1, air flow through air passage 19 is restricted at that circumferential location, with the result that pressure is built up between the film 14 and the upper annular body member 34. Consequently, the portion of the film 14 at that circumferential location travels upwardly in a path further from the upper annular body member 32. The film 14 is thus less laterally stretched at that circumferential location and hence becomes thicker.

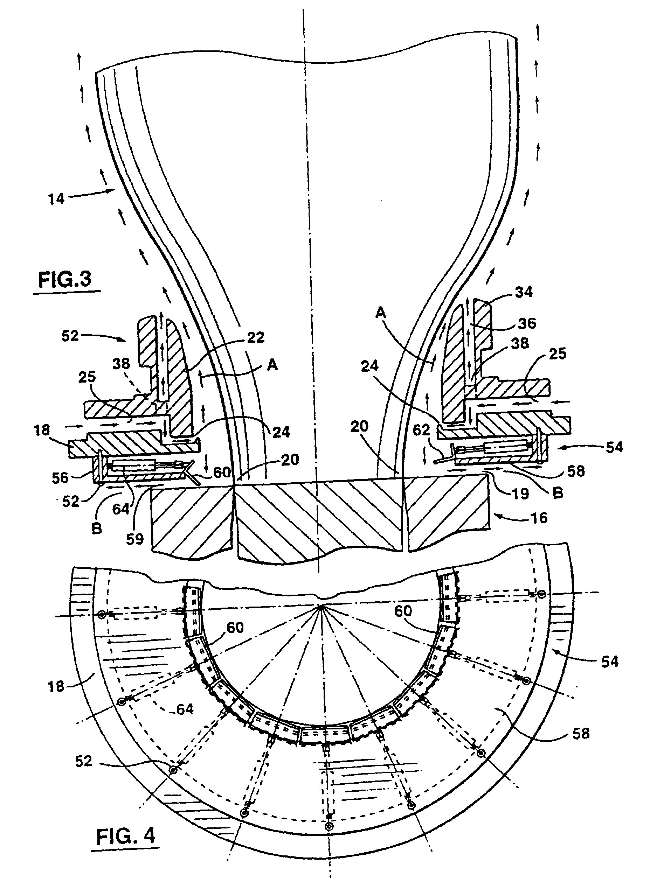

Referring now to Figures 3 and 4, an air ring, and air ring 52 in accordance with a further embodiment of the invention has various parts which are similar to those in the embodiments shown in Figures 1 and 2 and the same reference numerals will be used to identify such parts.

Again, in this embodiment, localised lateral movement of the film 14 is such that the film 14 becomes nearer to or further from the annular body member 22 of the air ring 12 is effected by adjusting the flow of air from the air passage 22 to an air passage 59 between the bottom of the lower annular body member 18 of the air ring 52 and the top of the extrusion die 16, thereby locally varying the pressure of air between the annular body member 22 and the film 14.

An annular support ring 54 of L-shaped section is secured to the bottom of the lower annular body member 18 by circumferentially spaced screws 54 extending upwardly through the vertical portion 56 of the support ring 52 into the lower annular body member 18, with the horizontal portion 58 of the support ring 102 extending horizontally radially inwardly in spaced relation to the lower annular body member 18.

A series of closely spaced flap members 60 are each pivotally secured at 62 to the radially inner end of the horizontal portion 58 of the support ring 52, the series extending completely around the radially inner end of the horizontal support ring portion 58. A series of actuators 64 extends completely around the support ring 52. Each actuator 64 is pivotally secured at its radially outer end to the vertical support ring portion 56, and is pivotally secured at its radially inner end to a respective flap member 60.

The actuators 64 may be electrically operated linear actuators, solenoid actuators, servo stepping motors, AC or DC positioning motors, torque motors acting against a spring or any other suitable type of actuator.

Each actuator 64 can be operated to vary the distance between the body member 22 and the film 14 by moving a flap member 60 to obstruct flow of air through the air passage 59 between the air ring 52 and the die 16 to a greater or lesser extent. If an actuator 64 is operated to move a flap member 60 downwardly to further restrict the flow of air through the air passage 59 between the air ring 52 and the die 16, as shown on the left of Figure 3, the portion of the film 14 passing that circumferential location moves further from the body member 22 so as to expand less. As a result, this portion of the film 14 becomes less stretched and hence thicker.

Conversely, if an actuator 64 is operated to move a flap member 60 upwardly to less restrict the flow of air in the air passage 59 (as shown on the right of Figure 3), the portion of the film 14 passing that circumferential location moves near the body member 22 so as to expand more. As a result, this portion of the film 14 is more stretched and therefore thinner. Each actuator 64 is adjusted in response to variations in gauge of the tubular film 14 leaving the air ring 52.

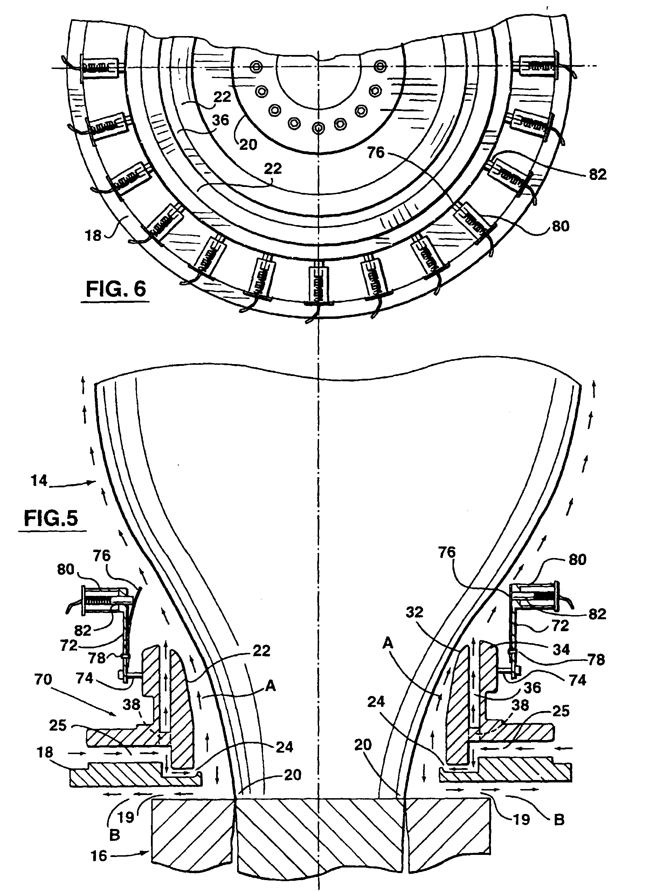

Referring now to Figures 5 and 6, an air ring 112 in accordance with a third embodiment of the invention has various parts which are the same as parts of the embodiment described with reference to Figures 1 to 4 and the same reference numerals will be used to indicate such parts.

Whereas in the embodiments of Figures 1 to 4, the pressure between the body member 22 and the plastic film 14 was varied by decreasing or increasing the flow of air in the air passage 19 or 59 between the bottom of the lower annular body member 18 and the die 16 at a desired circumferential location, a different principle is used in the embodiment of Figures 5 and 6, namely adjusting a deflector towards the film bubble 14 to build up pressure of air locally in air flow past the film bubble 14.

An annular support member 72 surrounds the upper end portion of the upper body member 22 in spaced relationship thereto and projects thereabove. The support members 72 being secured to the body member 22 by circumferentially spaced pins 74. A series of closely spaced vertically-oriented resilient flap member 76 are each secured at their lower ends by rivets 78 to the interior lower portion of the support member 72, the series extending completely around the interior of the support member 72. A series of electrically-operated actuators 80 is secured to the support member 72 at the upper end thereof, each having a linearly movable push member 82 engaging the upper end portion of a respective flap member 76.

As in the previous embodiment, the actuators 80 may be electrically operated linear actuators, solenoid actuators, servo stepping motors, AC or DC positioning motors, torque motors acting against the spring or any other suitable type of actuator.

If an actuator 80 is operated to vary the air pressure between the body member 22 and the film 14 by moving the flap member 76 radially inwardly to push the film 14 by increasing pressure between the film 14 and the flap member 76, as shown on the left of Figure 5, the portion of the film 14 passing that circumferential location moves further from the body member 22 so as to expand less. As a result, this portion of the film 14 becomes less stretched and hence thicker. Conversely, if an actuator 80 is operated to lower the air pressure by moving a flap member 76, as shown on the right of Figure 5, the portion of the film 14 passing that circumferential location moves nearer the body member 22 so as to expand more. As a result, this portion of the film 14 is more stretched and therefore thinner. Each actuator 80 is adjusted in response to variations in gauge of the tubular film 14 leaving the air ring 112.

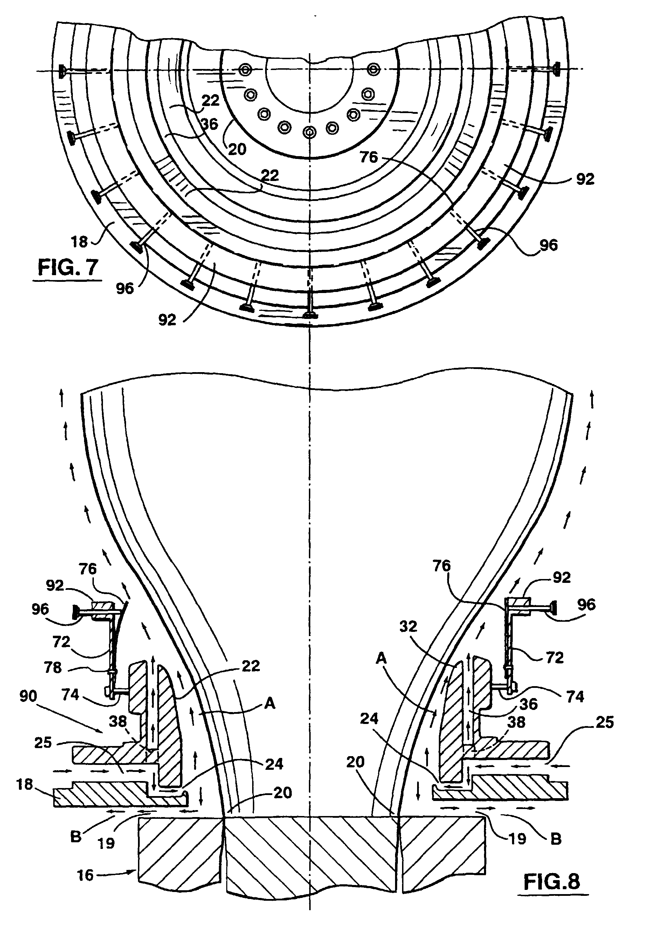

The air ring 90 as shown in Figures 7 and 8 is similar to the air ring 70 shown in Figures 5 and 6, except the electrically-operated actuators 80 have been replaced by manually adjustable actuators 92. Each actuator 92 has a main member 94 secured to the top of the support ring 72 and a linearly movable adjustor 96 screwed into the body member 94. The adjustor 96 has a manually gripable head 98 on the radially outer side thereof and a radially inner end projecting from the body member 92 into engagement with the respective flap member 96.

Thus, in the embodiment of Figures 7 and 8, the position of each flap member 76 is varied by manual adjustment of the adjustor 96 of the relevant actuator 92.

Other embodiments of the invention will be clearly apparent to a person skilled in the art, the scope of the invention being defined in the appended claims.

## Claims

1. An air ring for supplying cooling air to a hot extruded plastic film after the film has been extruded from an annular extrusion die at an elevated temperature, said air ring having:
an annular body which surrounds the tubular film after the film has left the extrusion die,
said body having a circumferentially extending air passage through which air can be supplied from an external source and which directs cooling air from the passage between the body and the film,
and a circumferentially extending series of individually operable actuators each operable to vary the flow of cooling air to cause the film to become nearer to or further from the body at its circumferential location to cause the thickness of the film at said location to decrease or increase.

2. An air ring according to claim 1, wherein the actuators are secured to the bottom of the annular body to enable flow of cooling air from the circumferentially extending passage through an outlet passage between the bottom of the annular body and the top of the die to be controlled at the location concerned.

3. An air ring according to claim 1 or claim 2, wherein each actuator is operable to deflect an electrically controlled bi-metallic member to control the flow of air through the outlet passage at the circumferential location concerned.

4. An air ring according to claim 1 or claim 2, wherein each actuator is operable to move a flap member to control the flow of air through the outlet passage at the circumferential location concerned.

5. An air ring according to any preceding claim, wherein each actuator is electrically controlled.

6. An air ring according to claim 1, wherein the actuators are secured to an upper portion of the annular body to enable the flow of cooling air which has passed between the annular body and the film to be controlled.

7. An air ring according to claim 6, wherein each actuator is operable to move a flap member to control the flow of air which has passed between the annular body and the film.

8. An air ring according to claim 7, wherein each actuator is electrically controlled.

9. An air ring according to claim 7, wherein each actuator is manually operable.
